# EUROPÄISCHE PATENTSCHRIFT

(11) **EP 2 859 334 B1**
(45) Veröffentlichungstag und Bekanntmachung des Hinweises auf die Patenterteilung: **20.11.2019**
(21) Anmeldenummer: 13719092.2
(22) Anmeldetag: 26.04.2013
(51) Int. Cl.: G01N 21/84

(54) **VERFAHREN ZUM BESTIMMEN DER QUALITÄT VON AUF SUBSTRATEN AUFGEBRACHTEN SCHICHTEN**
METHOD FOR DETERMINING THE QUALITY OF LAYERS DEPOSITED ON SUBSTRATES
PROCÉDÉ POUR DÉTERMINER LA QUALITÉ DE COUCHES APPLIQUÉES SUR DES SUBSTRATS

(30) Priorität: 11.06.2012 DE 102012209686
(43) Veröffentlichungstag der Anmeldung: 15.04.2015
(73) Patentinhaber: Robert Bosch GmbH, 70442 Stuttgart (DE)
(72) Erfinder: VINCON, Martin, 75447 Sternenfels (DE); GROSSE, Stefan, 70839 Gerlingen (DE); REPPHUN, Gernot, 72336 Balingen (DE); MAY, Ulrich, 71277 Rutesheim (DE); FRAUNE, Michael, 70499 Stuttgart (DE); ONUSEIT, Leni, 70565 Stuttgart (DE)
(86) Internationale Anmeldenummer: PCT/EP2013/058686
(87) Internationale Veröffentlichungsnummer: WO 2013/185970

(56) Entgegenhaltungen:
- US-A- 5 748 317
- US-A1- 2002 135 784
- US-A1- 2006 052 979

## Beschreibung

### Stand der Technik

Die Erfindung geht aus von einem Verfahren zum Bestimmen der Qualität von auf Substraten aufgebrachten Schichten, insbesondere von auf Substraten wie Metallen, Gläsern, Keramiken, und Kunststoffen aufgebrachten Schichten und/oder Hartstoffschichten und/oder Schichten für Verschleißschutz, Korrosionsschutz, Dekoration, Photovoltaik und/oder Lacken und Laminaten nach der Gattung des Patentanspruchs 1 sowie von einer Vorrichtung zur Durchführung des Verfahrens nach der Gattung des Patentanspruchs Qualitätsbestimmungsverfahren für Schichten nach dem Stand der Technik sind aus folgenden Dokumenten bekannt:

US-A-2006/052979, US-A-2002/135784 und US-A-5748317.

Zur Qualitätskontrolle von beschichteten Bauteilen, deren Zuverlässigkeit im bestimmungsgemäßen Einsatz bzw. Betrieb in hohem Maße von der Schichthaftung abhängig ist, ist es insbesondere bei der Serienfertigung derartiger Bauteile erforderlich, die Schichtqualität mittels eines geeigneten Prüfverfahrens zu ermitteln und zu bewerten. Beispielsweise bei Kohlenstoffschichten, insbesondere bei amorphen Kohlenstoffschichten, die auch als diamantähnliche Kohlenstoffschichten bezeichnet werden, wird häufig als Standardprüfverfahren zur Ermittlung der Haftfestigkeit einer gesamten Seriencharge das sog. Härteprüfverfahren nach Rockwell eingesetzt, bei dem mittels eines manuell aufgebrachten Haftungseindrucks an einzelnen Bauteilen einer Herstellungscharge die Haftfestigkeit überprüft wird, indem durch eine kegelförmige Diamantspitze, die einen Öffnungsradius von 120° und eine verrundete Spitze von 0.2 mm aufweist, als Eindringkörper eine definierte Prüfkraft auf einen Prüfkörper, d.h. auf das beschichtete Bauteil, ausgeübt wird. Bei diesem rein mechanischen Prüfverfahren führt dies zu einer plastischen Verformung des Grundmaterials und dadurch zu einem Materialaufwurf am Rande des Eindrucks und somit zu Zugspannungen innerhalb der Schicht im Bereich des Aufwurfs. Derartige Zugspannungen können in solchen Bereichen mit relativ schlechter Schichthaftung zu einer Schädigung der entsprechenden Schicht, d.h. beispielsweise zu Rissen oder Ausbrüchen führen.

In einer an den Haftungseindruck anschließenden lichtmikroskopischen Analyse des Eindrucks wird eine Klassifizierung der Haftungsqualität vorgenommen, indem eine optische Zuordnung von Schadensbildern einer vordefinierten Haftungsklasse erfolgt. Ein Nachteil ist, dass das Verfahren lediglich eine stichprobenhafte, lokale Messung an einzelnen Bauteilen und ausgewählten Punkten auf der Bauteiloberfläche der zu untersuchenden Schichtstruktur erlaubt und demgemäß nur bedingt zur Qualitätskontrolle geeignet ist. Nachteilig bei diesem Verfahren ist der ebenfalls hohe Zeit- und Arbeitsaufwand, der nur eine stichprobenhaft durchführbare Qualitätskontrolle zulässt.

Ein anderes zum Stand der Technik zählendes und zur Qualitätskontrolle eingesetztes Verfahren ist die sog. Shearographie. Dabei handelt es sich um ein interferometrisches Messverfahren, mit dem oberflächennahe Verformungen und Zustandsänderungen eines zu untersuchenden Prüfkörpers detektierbar sind, indem aus der Überlagerung eines von dem Prüfkörper reflektierten Laserstrahls und eines Referenzstrahls, der von einer defektfreien, gut haftenden Stelle des Prüfkörpers reflektiert wird, entsprechende Phasendifferenzen ermittelt werden. Problematisch bei diesem Messverfahren ist jedoch, dass lediglich oberflächennahe Zustände nachweisbar sind und mit diesem Verfahren nicht genügend Energie in eine zu untersuchende Schicht einkoppelbar ist, um die Haftfestigkeit im Grenzschichtbereich zwischen der Kohlenstoffschicht und dem Substrat detektieren zu können.

Bei einem weiteren bekannten und zur Qualitätskontrolle von Prüfkörpern eingesetzten Messverfahren handelt es sich um die sog. Thermographie. Dabei wird ein Prüfkörper mit einem amplitudenmodulierten Lichtstrahl derart bestrahlt, dass sich der Prüfkörper aufgrund der dadurch erzeugten und im Prüfkörper sich ausbreitenden thermischen Welle homogen erwärmt. Die vom Prüfkörper abgestrahlte Strahlung wird mittels einer Infrarotkamera detektiert. Bei Anwendung dieses Verfahrens auf Schichtstrukturen ergibt sich an Stellen in der Schicht, welche eine relativ schlechte Haftung auf dem Substrat aufweisen, eine geringere Wärmeleitung im Vergleich zu Stellen mit relativ guter Haftung, jedoch sind die mit diesem Verfahren erzielbaren Messergebnisse nicht immer eindeutig mit Haftfestigkeitsschwankungen bzw. Haftfestigkeitsunterschieden der Schicht korrelierbar.

### Vorteile der Erfindung

Im Gegensatz zum herkömmlichen Standardprüfverfahren, das lediglich stichprobenhaft durchführbare lokale Messungen der Haftfestigkeit einer zu prüfenden Schicht auf einem Substratuntergrund erlaubt, hat das erfindungsgemäße Verfahren mit den Merkmalen des Patentanspruchs 1 den Vorteil, dass aufgrund der optischen Abtastung flächige und innerhalb eines vorbestimmten Abtastfeldes lückenlose Messungen an einer zu prüfenden Schicht möglich sind, mit denen die Haftungsqualität der Schicht auf dem entsprechenden Substratuntergrund aufgrund der Detektion des von der Schicht reflektierten Laserstrahlenbündels klassifizierbar ist, indem ausgewählte Laserparameter des zur Erzeugung des abtastenden Laserstrahlenbündels vorgesehenen Lasers nach Maßgabe von berechneten physikalischen Eigenschaften des jeweiligen Schichtmaterials eingestellt werden, um die elektromagnetische Laserstrahlung optimal in die Schicht einzukoppeln. Insbesondere an solchen Schichtstrukturen, die einer bestimmten Herstellungscharge mit während der Herstellung unveränderten Prozessbedingungen zugeordnet sind, ist das erfindungsgemäße Verfahren als automatisch ablaufende Prüfprozedur vorteilhaft einsetzbar.

Weitere vorteilhafte Weiterbildungen und Ausgestaltungen der Erfindung ergeben sich durch die in den Unteransprüchen aufgeführten Maßnahmen.

### Zeichnungen

Ausführungsbeispiele der Erfindung sind in der nachfolgenden Beschreibung und in den beigefügten Zeichnungen näher erläutert. Letztere zeigen in schematisch gehaltenen Ansichten:
Fig. 1 das Prinzip des erfindungsgemäßen Verfahrens in einer schematischen Darstellung, wobei ein gepulstes Laserstrahlenbündel auf eine im Querschnitt dargestellte Schichtstruktur aus einem Substrat und einer darauf aufgebrachten Schicht gelenkt wird und ein dann von der Schichtstruktur reflektiertes Laserstrahlenbündel detektiert wird,
Fig. 2 eine erste Ausführungsform einer zur Durchführung des erfindungsgemäßen Verfahrens dienenden Vorrichtung in einer schematisch gehaltenen Ansicht, und
Fig. 3 eine alternative Ausführungsform der Vorrichtung zur Durchführung des erfindungsgemäßen Verfahrens in einer schematisch gehaltenen Ansicht.

### Beschreibung der Ausführungsbeispiele

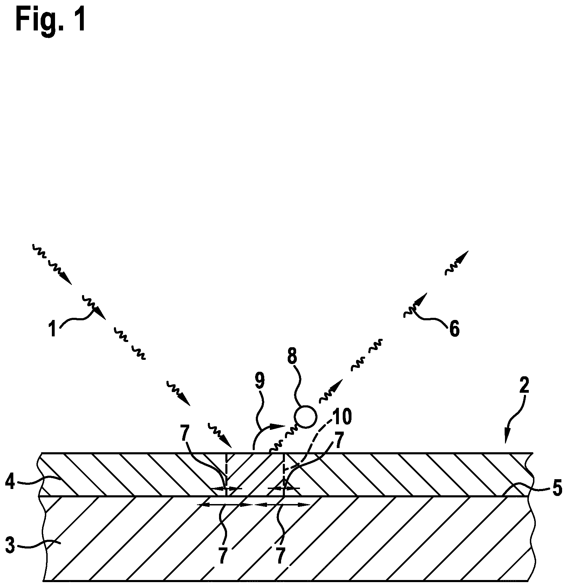

Fig. 1 zeigt in einer schematischen Darstellung das dem erfindungsgemäßen Verfahren zugrundeliegende Prinzip. Ein von einem gepulst betriebenem Laser emittiertes Laserstrahlenbündel 1 wird auf eine Materialstruktur 2 gelenkt. Diese Materialstruktur 2 besteht im bevorzugten Ausführungsbeispiel aus einem Stahl-Substrat 3 und einer auf das Substrat 3 aufgebrachten Schicht 4. Mit dem auf die Schichtstruktur einfallenden Laserstrahlenbündel wird definiert Energie in den Übergang Substrat zu Funktionsschicht transferiert. Dieser Übergang wird beispielsweise bei C-Schichten üblicherweise mittels einer Haftschicht der Schichtdicke 50-500 nm realisiert. Dadurch wird kurzzeitig über eine Pulslänge in der Interface-Schicht zwischen Substrat 3 und Schicht 4 eine Temperaturerhöhung erzeugt, die zu einer thermischen Ausdehnung von Substrat 3 und Schicht 4 führt. Aufgrund der unterschiedlichen thermischen Längenausdehnungskoeffizienten von Substrat 3 und Schicht 4 (typische Längenausdehnungskoeffizienten sind z.B. 1.1 • 10⁻⁵ K⁻¹ im Falle von 100Cr6-Stahl als Substrat und 1 • 10⁻⁶ K⁻¹ im Falle einer amorphen, diamantähnlichen a-C:H-Schicht) dehnen sich das Substrat 3 und die Schicht 4 unterschiedlich stark aus und bewirken Scherspannungen 7 in der Interface-Schicht bzw. Grenzschicht zwischen dem Substrat 3 und der darauf angeordneten Schicht 4. Diese Scherspannungen 7 können an Stellen, wo die Schicht 4 eine relativ schlechte Haftung auf dem Substrat 3 aufweist, zum lokalen Aufbrechen bzw. Aufplatzen der Schicht 4 auf dem Substrat 3 führen, wenn die durch das einfallende Laserstrahlenbündel erzeugte thermische Energie entsprechend groß ist, so dass in einem solchen Fall einzelne Schichtfragmente 8 aus der Schicht 4 abplatzen können.

Gemäß dem erfindungsgemäßen Verfahren wird zunächst der komplexe Brechungsindex N der zu prüfenden Schicht 4, welcher sich aus dem reellen Brechungsindex n und dem Extinktionskoeffizienten K zusammensetzt, experimentell, z. B. mittels Reflektanzmessungen, bestimmt. Aus dem Extinktionskoeffizient K des Schichtmaterials kann dann wiederum gemäß dem Absorptionsgesetz von Beer-Lambert der Absorptionskoeffizient des Schichtmaterials errechnet werden. Aufgrund des errechneten Werts für den Absorptionskoeffizient wird die Emissionswellenlänge λ bzw. Emissionsfrequenz v des Lasers gewählt, bei welcher die auf die Substratschicht 3 aufgebrachte Schicht 4 für die einfallende elektromagnetische Strahlung 1 des Lasers zumindest teilweise optisch transparent ist, um sicherzustellen, dass die elektromagnetische Strahlung eine Eindringtiefe in die zu prüfende Schicht 4 aufweist, welche im Bereich der Dicke der Schicht liegt. Je nach Typ der zu untersuchenden Schicht wird ein Laser mit einer Emissionsfrequenz gewählt, welche beispielsweise für Kohlenstoffschichten im sichtbaren, infraroten oder nahinfraroten Spektralbereich liegt.

Auf der Basis von Wärmeleitungsberechnungen für die Schicht 4 und das darunter angeordnete Substrat 3 werden ferner die übrigen Laserparameter festgelegt. Dazu wird die Impulsdauer des gepulst betriebenen Lasers so gewählt, dass mit der Impulsdauer die in die Schicht 4 eingekoppelte Energie festgelegt wird, durch die kurzzeitig eine Temperaturerhöhung innerhalb des bestrahlten Schichtsegments 10 in der Interface- bzw. Grenzschicht zwischen dem Substrat 3 und der darüber angeordneten Schicht 4 erzeugt wird. Der Impulsabstand, d.h. der Zeitabstand zwischen jeweils zwei unmittelbar aufeinander folgenden Pulsen, wird auf die gewählte Impulsdauer abgestimmt und dabei so gewählt, dass eine möglichst vollständige Abkühlung des zuvor erwärmten Schichtsegments 10 erfolgt. Typische Werte für die Impulsdauer und den Impulsabstand liegen abhängig von der Leitfähigkeit und der Schichtdicke bevorzugt im Pikosekunden- bis hin zum Millisekundenbereich. Das von dem in dieser Weise gepulst betriebenen Laser emittierte Laserstrahlenbündel wird mit definiertem Fokus auf die Oberfläche der Materialstruktur 2 gelenkt bzw. geführt. Innerhalb des vom Fokus bestimmten Schichtbereichs bewirkt das in die Schicht 4 eindringende Laserstrahlenbündel 1 eine zyklische Erwärmung und zumindest teilweise Abkühlung dieses Schichtsegments 10 im Takt der durch die Ansteuerung eingestellten Pulsung. Das von der Schicht 4 rückreflektierte Laserstrahlenbündel 6 wird detektiert, wobei die detektierte Intensität des reflektierten Laserstrahlenbündels ein Maß für die Haftfestigkeit der Schicht an der bestrahlten Stelle ist. So wird beispielsweise für eine schwarze Kohlenstoffschicht an solchen Stellen, wo die Schicht 4 von dem darunterliegenden metallischen Substrat bereits enthaftet ist, die Reflektivität des blanken metallischen Grundmaterials wesentlich höher sein als an Stellen mit intakter Schichthaftung.

Um eine flächige Untersuchung der zu prüfenden Schicht 4 durchzuführen, wird gemäß einer ersten Ausführungsvariante des Verfahrens der Prüfkörper, d.h. die aus dem Substrat und der Schicht gebildete Materialstruktur 2, unter dem ortsfest einfallenden Laserstrahlenbündel 1 in x-y-Richtung bei flachen Proben und in x-y-z-Richtung bei 3D-Topographien hindurchbewegt und die Intensität des reflektierten Strahlenbündels für jeden am verfahrbaren Probentisch eingestellten Koordinatenpunkt x,y und z gemessen. Gemäß einer zweiten Ausführungsvariante wird das Laserstrahlenbündel 1 über die Oberfläche der Schicht 4 des ortsfest gehaltenen Prüfkörpers 2 geführt bzw. bewegt, wobei für beide Ausführungsbeispiele die jeweilige Intensität, Phase und Polarisation des reflektierten Laserstrahlenbündels 6 in Abhängigkeit von dem jeweils eingestellten Koordinatenpunkt (x,y,z) als Funktion der zeitabhängigen Ablenkung des Laserstrahlenbündels erfasst und ausgewertet wird.

Eine abgewandelte Ausführungsvariante des erfindungsgemäßen Verfahrens kann darin bestehen, dass in Fällen, wo es nicht möglich ist, einen Laser mit einer in Bezug auf das Schichtmaterial durchgeführten Berechnungen passenden Emissionsfrequenz zu selektieren, für welche die zu untersuchende Schicht zumindest teilweise optisch transparent ist, alternativ mit einem Laser, der eine nicht optimale geeignete Emissionsfrequenz aufweist, bei relativ hoher Leistung auf die Schicht 4 einzustrahlen, um - im Takt der eingestellten Pulsung - eine Erwärmung im gesamten Volumen der Schicht mit einer sich jeweils daran anschließenden Abkühlphase zu erzielen.

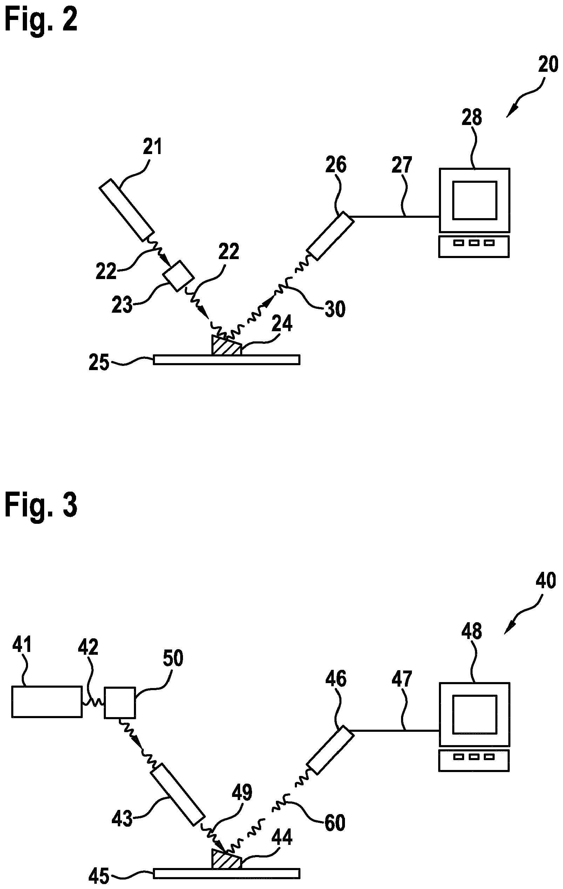

Fig. 2 zeigt eine erste Ausführungsform einer zur Durchführung des erfindungsgemäßen Verfahrens geeigneten Vorrichtung 20 mit den zur Durchführung der Verfahrensschritte wesentlichen Komponenten. Das von einem gepulst betriebenen Laser 21 emittierte Laserstrahlenbündel 22 gelangt zunächst auf ein in Strahlrichtung angeordnetes Objektivsystem 23, mit welchem das Laserstrahlenbündel 22 auf die Oberfläche eines aus einem Substrat und einer darauf angeordneten Schicht gebildeten Prüfkörpers 24 fokussiert wird, wobei der Prüfkörper 24 auf einem Probentisch 25 montiert ist, der in drei orthogonal zueinander verlaufenden Richtungen in der Ebene des Probentischs 25 sowie senkrecht dazu verfahrbar bzw. steuerbar ausgebildet ist. Das von der Schicht des Prüfkörpers 24 reflektierte Strahlenbündel 30 wird von einem Detektor 26 erfasst, der in Ausfallsrichtung des reflektierten Strahlenbündels 30, d.h. unter einem Ausfallswinkel bezüglich der Flächennormalen angeordnet ist. Der Detektor 26, welcher bevorzugt als Kamera mit darin aufgenommenen arrayförmig angeordneten Detektionselementen ausgebildet ist, erfasst die empfangenen optischen Signale und wandelt diese in elektrische Signale um, welche über eine Signalleitung 27 an eine Rechen- und Anzeigeeinheit 28 übertragen und dort ausgewertet werden. Die ausgewerteten Signale werden mittels eines in der Rechen- und Anzeigeeinheit 28 ablaufenden Bilderfassungsprogramms visuell von der Rechen- und Anzeigeeinheit 28 dargestellt. Die visuelle Darstellung der erfassten und ausgewerteten Daten bzw. Signale wird dabei in Abhängigkeit von dem jeweils am Probentisch 25 eingestellten Ortskoordinatenpunkt (x,y,z) für den Prüfkörper erfasst, ausgewertet und dargestellt, so dass die von der Rechen- und Anzeigeeinheit 28 berechnete visuelle Darstellung insgesamt ein ortsaufgelöstes Diagramm ergibt, bei dem der Intensitätsverlauf, gegebenenfalls auch die Phase sowie Polarisation des gemessenen reflektierten Strahlenbündels als Funktion des jeweils eingestellten Ortskoordinatenpunkts (x,y,z) dargestellt wird. Der in x-Richtung, y-Richtung und z-Richtung verfahrbare Probentisch 25 wird dabei so gesteuert, dass sukzessive die Oberfläche der zu untersuchenden Schicht des Prüfkörpers 24 unter dem ortsfest eingestrahlten Laserstrahlenbündel 22 abgescannt bzw. abgetastet wird.

Fig. 3 zeigt eine zweite Ausführungsform der zur Durchführung des erfindungsgemäßen Verfahrens dienenden Vorrichtung 40 mit den zur Durchführung der Verfahrensschritte wesentlichen Komponenten. Diese zweite Ausführungsform unterscheidet sich von der ersten Ausführungsform darin, dass zum ortsaufgelösten Abtasten bzw. Abscannen der auf dem Substrat angeordneten Schicht des Prüfkörpers eine optische Scannereinheit verwendet wird. Dazu gelangt ein von dem Laser 41 erzeugtes Laserstrahlenbündel 42 zunächst auf eine in Strahlrichtung angeordnete optische Scannereinheit 50, welche zur Ablenkung des ankommenden Laserstrahlenbündels 42, d.h. zur zeitabhängigen Richtungsänderung des Laserstrahlenbündels dient, um das Strahlenbündel in drei voneinander unabhängigen und zueinander orthogonalen Richtungen x und y sowie z über die Oberfläche der zu untersuchenden Schicht 4 zu führen bzw. bewegen. Das von der optischen Scannereinheit 50 zeitabhängig abgelenkte Laserstrahlenbündel 49 gelangt auf ein in Ablenkrichtung angeordnetes Objektivsystem 43, mit dem das abgelenkte Strahlenbündel 49 auf die Oberfläche des Prüfkörpers 44 fokussiert wird, wobei der aus dem Substrat und der darauf angeordneten Schicht gebildete Prüfkörper 44 auf einem Probentisch 45 ortsfest montiert ist, welcher - im Unterschied zu der in Fig. 2 veranschaulichten Ausführungsform - ortsfest ausgebildet ist. Die optische Scannereinheit 50 kann in dieser Ausführungsform z.B. mittels sog. Galvanometerscanner realisiert sein, wobei für die erforderliche dreidimensionale Abtastung der Schicht 4 des Prüfkörpers drei derartige Galvanometerscanner so hintereinander angeordnet werden, dass deren Drehachsen orthogonal zueinander ausgerichtet sind. Dabei bestimmen ihre jeweils eingestellten Drehwinkelbereiche die Größe der Abtastebene.

Das von der Schicht 4 des Prüfkörpers 44 reflektierte Strahlenbündel 60 wird von einem Detektor 46 erfasst, der in Ausfallsrichtung des reflektierten Strahlenbündels 60, d.h. unter einem Ausfallswinkel bezüglich der Flächennormalen angeordnet ist. Der bevorzugt als Kamera mit darin aufgenommenen arrayförmig angeordneten Detektionselementen ausgebildete Detektor 46 erfasst die jeweils empfangenen optischen Signale und wandelt diese in elektrische Signale um, welche dann über eine Signalleitung 47 an eine Rechen- und Anzeigeeinheit 48 übertragen und dort ausgewertet werden. Die ausgewerteten Signale werden mittels eines in der Rechen- und Anzeigeeinheit 48 ablaufenden Bilderfassungsprogramms visuell von der Rechen- und Anzeigeeinheit 48 dargestellt, wobei der gemessene Intensitätsverlauf und gegebenenfalls die Phase sowie Polarisation des von der Schicht 4 des Prüfkörpers reflektierten Strahlenbündels 60 in Abhängigkeit von der jeweiligen Abtastposition in x-Richtung, y-Richtung und z-Richtung des die Schicht überstreichenden Laserstrahlenbündels 49 als Funktion des Ablenkwinkels angezeigt wird.

Eine - in Fig.2 und 3 nicht dargestellte - Impulsformungseinrichtung ist in beiden Ausführungsformen der erfindungsgemäßen Vorrichtung 20 bzw. 40 vorgesehen, um den Laser 21 bzw. 41 so definiert anzusteuern, dass rechteckförmige Strahlungsimpulse generiert werden, deren Impulslänge und Impulsabstand jeweils einstellbar sind.

Die Auflösung der erfindungsgemäßen Vorrichtung 20 bzw. 40 wird im wesentlichen durch den Strahldurchmesser des Strahlenbündels am Auftreffpunkt auf der Schichtoberfläche bestimmt. Dazu ist das Objektivsystem derart in Strahleinfallsrichtung angeordnet, dass dessen Fokus mit der Schichtoberfläche zusammenfällt, so dass die Auflösung im wesentlichen von dem Fokus des verwendeten Objektivsystems abhängig ist.

Um das erfindungsgemäße Verfahren zerstörungsfrei auszugestalten, wird die Leistung des eingesetzten Lasers, welcher in Abhängigkeit von der nach Maßgabe der durchgeführten Berechnungen gewählten Emissionsfrequenz bzw. Emissionswellenlänge bevorzugt ein Festkörperlaser oder ein Halbleiterlaser sein kann, so eingestellt, dass unterhalb eines voraus berechneten Leistungsschwellenwerts auf die zu untersuchende Schicht eingestrahlt wird, bei dem eine Ablösung einzelner Schichtfragmente zu erwarten wäre. Ein typischer Wert für die eingestrahlte Laserleistung liegt im Bereich von 1 Watt.

Zusammenfassend ist für das erfindungsgemäße Verfahren mithin charakteristisch, dass gepulstes Laserlicht erzeugt wird, mit welchem die zu untersuchende Schicht 4 ortsaufgelöst abgetastet wird, und ein von der Schicht 4 reflektiertes Strahlenbündel 6 erfasst und hinsichtlich der Intensität ausgewertet wird, wobei das Laserlicht derart gepulst wird, dass ein jeweils damit bestrahlter Schichtabschnitt 10 bis hinab in die an den Substratuntergrund angrenzende Interface-Schicht zyklisch alternierend erwärmt und zumindest teilweise abgekühlt wird. Die dabei erzeugten Scherspannungen sind auf jeweils unterschiedliche thermische Längenausdehnungskoeffizienten der Schicht 4 und des darunter angeordneten Substrats 3 zurückzuführen. Dadurch ist es möglich, Stellen der Schicht 4 mit unterschiedlicher Haftung auf dem Substratuntergrund aufgrund ihres unterschiedlichen Reflexionsverhaltens zu detektieren. Gemäß einer vorteilhaften Ausgestaltung der Erfindung wird die Emissionswellenlänge des Laserlichts so gewählt, dass sich die Schicht 4 zumindest teilweise optisch transparent für das einfallende Laserlicht 1 verhält.

## Patentansprüche

1. Verfahren zum Bestimmen der Qualität von auf Substraten (3) aufgebrachten Schichten (4), insbesondere von auf Substraten (3) wie Metallen, Gläsern, Keramiken und Kunststoffen aufgebrachten Schichten (4) und/oder Hartstoffschichten und/oder Schichten für Verschleißschutz, Korrosionsschutz, Dekoration, Photovoltaik und/oder Lacken und Laminaten, wobei gepulstes Laserlicht erzeugt wird, mit welchem die zu untersuchende Schicht (4) ortsaufgelöst abgetastet wird, und von der Schicht (4) reflektiertes Laserlicht (6) erfasst und hinsichtlich der Intensität und/oder Phase und/oder Polarisation ausgewertet wird, wobei das Laserlicht derart gepulst wird, dass ein jeweils damit bestrahlter Schichtabschnitt (10) zyklisch alternierend erwärmt und zumindest teilweise abgekühlt wird und wobei die Impulsdauer des Laserlichts so gewählt wird, dass kurzzeitig eine Temperaturerhöhung innerhalb des bestrahlten Schichtabschnitts (10) in der Interface- bzw. Grenzschicht zwischen dem Substrat (3) und der darüber angeordneten Schicht (4) erzeugt wird.
[Anspruch gestrichen]

2. Verfahren nach Anspruch 1,
**dadurch gekennzeichnet, dass** der Impulsabstand zwischen unmittelbar aufeinanderfolgenden Laserlichtimpulsen derart eingestellt wird, dass sich die Schicht in einem jeweils bestrahlten Schichtabschnitt (10) zumindest teilweise abkühlen kann.

3. Verfahren nach einem der Ansprüche 1 bis 2,
**dadurch gekennzeichnet, dass** die Emissionswellenlänge des Laserlichts so gewählt wird, dass sich die Schicht (4) zumindest teilweise optisch transparent für das einfallende Laserlicht (1) verhält.

4. Vorrichtung zur Durchführung des Verfahrens nach einem der Ansprüche 1 bis' 3 mit wenigstens einem Laser (21, 41) zum Erzeugen von gepulstem Laserlicht, welches die zu untersuchende Schicht (4) ortsaufgelöst abtastet, einer Einrichtung (23, 43) zum Fokussieren des Laserlichts (22, 42) auf die zu untersuchende Schicht (4), einer in Strahlausfallsrichtung angeordneten Detektionseinrichtung (26, 46) zum Erfassen des von der Schicht (4) reflektierten Laserlichts, einer zur definierten Impulsformung des Laserlichts vorgesehenen Impulsformungssteuereinrichtung, die die Impulsdauer des Laserlichts so wählt, dass kurzzeitig eine Temperaturerhöhung innerhalb des bestrahlten Schichtabschnitts (10) in der Interface- bzw. Grenzschicht zwischen dem Substrat (3) und der darüber angeordneten Schicht (4) erzeugt wird, einer Einrichtung zum optischen Abtasten der Schicht, und einer Prozessor- und Anzeigeeinrichtung (28, 48) zum Auswerten und Anzeigen des von der Detektionseinrichtung (26, 46) erfassten Laserlichts.

5. Vorrichtung nach Anspruch 4,
**dadurch gekennzeichnet, dass** die Einrichtung zum optischen Abtasten einen Probentisch (25) aufweist, der in seiner Tischebene zweidimensional sowie senkrecht dazu schrittweise verfahrbar und steuerbar ausgebildet ist.

6. Vorrichtung nach Anspruch 4,
**dadurch gekennzeichnet, dass** die Einrichtung zum optischen Abtasten als x-y-z-Scannereinheit (50) ausgebildet ist, die so angeordnet ist, dass sie ein von dem wenigstens einen Laser (41) emittiertes Strahlenbündel (42) in Richtung der Schicht ablenkt und über diese Schicht führt.

7. Vorrichtung nach einem der Ansprüche 4 bis 6,
**dadurch gekennzeichnet, dass** zum Fokussieren des von dem wenigstens einen Laser emittierten Laserlichts auf die zu untersuchende Schicht ein Objektiv (23, 43) in Strahleinfallsrichtung angeordnet ist.

8. Vorrichtung nach einem der Ansprüche 4 bis 7,
**dadurch gekennzeichnet, dass** die Prozessor- und Anzeigeeinrichtung (28, 48) mit der Detektionseinrichtung (26, 46) in Signalverbindung steht.

9. Vorrichtung nach einem der Ansprüche 4 bis 8,
**dadurch gekennzeichnet, dass** die Impulsfomungseinrichtung den wenigstens einen Laser derart steuert, dass rechteckförmige Laserstrahlungsimpulse generiert werden, deren Impulslänge und Impulsabstand jeweils einstellbar sind.

## Claims

1. Method for determining the quality of layers (4) applied on substrates (3), in particular of layers (4) applied on substrates (3) such as metals, glasses, ceramics and plastics, and/or hard material layers and/or layers for protection against wear, protection against corrosion, decoration, photovoltaics and/or coatings and laminates, wherein pulsed laser light is generated, the layer (4) to be examined being scanned in a spatially resolved manner by means of said laser light, and laser light (6) reflected from the layer (4) is detected and evaluated with regard to intensity and/or phase and/or polarization, wherein the laser light is pulsed in such a way that a layer section (10) respectively irradiated thereby is cyclically alternately heated and at least partly cooled down, and wherein the pulse duration of the laser light is chosen so as to generate momentarily a temperature increase within the irradiated layer section (10) in the interface layer or boundary layer between the substrate (3) and the layer (4) arranged thereabove.

2. Method according to Claim 1, **characterized in that** the pulse spacing between directly successive laser light pulses is set in such a way that the layer can at least partly cool down in a respectively irradiated layer section (10).

3. Method according to either of Claims 1 and 2, **characterized in that** the emission wavelength of the laser light is chosen such that the layer (4) behaves in a manner at least partly optically transparent to the incident laser light (1).

4. Apparatus for carrying out the method according to any of Claims 1 to 3 comprising at least one laser (21, 41) for generating pulsed laser light that scans the layer (4) to be examined in a spatially resolved manner, a device (23, 43) for focusing the laser light (22, 42) onto the layer (4) to be examined, a detection device (26, 46) arranged in the beam emergence direction and serving for detecting the laser light reflected from the layer (4), a pulse shaping control device provided for the defined pulse shaping of the laser light, said pulse shaping control device choosing the pulse duration of the laser light so as to generate momentarily a temperature increase within the irradiated layer section (10) in the interface layer or boundary layer between the substrate (3) and the layer (4) arranged thereabove, a device for optically scanning the layer, and a processor and display device (28, 48) for evaluating and displaying the laser light detected by the detection device (26, 46).

5. Apparatus according to Claim 4, **characterized in that** the device for optical scanning comprises a sample stage (25), which is movable in its stage plane two-dimensionally and perpendicularly thereto in steps and is embodied such that it is controllable.

6. Apparatus according to Claim 4, **characterized in that** the device for optical scanning is embodied as an x-y-z scanner unit (50) arranged such that it deflects a beam (42) emitted by the at least one laser (41) in the direction of the layer and guides said beam over said layer.

7. Apparatus according to any of Claims 4 to 6, **characterized in that** for the purpose of focusing the laser light emitted by the at least one laser onto the layer to be examined, an objective (23, 43) is arranged in the beam incidence direction.

8. Apparatus according to any of Claims 4 to 7, **characterized in that** the processor and display device (28, 48) is signal-connected to the detection device (26, 46).

9. Apparatus according to any of Claims 4 to 8, **characterized in that** the pulse shaping device controls the at least one laser in such a way that rectangular laser radiation pulses are generated, the pulse length and pulse spacing of which are adjustable in each case.

## Revendications

1. Procédé pour déterminer la qualité de couches (4) appliquées sur des substrats (3), notamment de couches (4), de couches en matériau dur, de couches de protection contre l'usure, de protection contre la corrosion, de décoration, photovoltaïques et/ou de vernis et de stratifiés, appliqués sur des substrats (3) tels que des métaux, des verres, des céramiques et des matières synthétiques,
dans lequel une lumière laser puisée est formée pour palper selon une résolution locale la couche (4) à étudier, la lumière laser (6) réfléchie par la couche (4) est interceptée et son intensité, sa phase et/ou sa polarisation sont évaluées,
la lumière laser étant puisée de telle sorte que chaque partie (10) de la couche soit alternativement chauffée et ou moins partiellement refroidie,
la durée des impulsions de la lumière laser étant sélectionnée de telle sorte qu'une brève augmentation de température soit formée à l'intérieur de la partie irradiée (10) de la couche, à l'interface ou la couche frontière entre le substrat (3) et la couche (4) située par-dessus.

2. Procédé selon la revendication 1, **caractérisé en ce que** l'écart entre des impulsions de lumière laser directement successives est réglé de telle sorte que la couche puisse se refroidir au moins partiellement dans chaque partie (10) de la couche irradiée.

3. Procédé selon les revendications 1 et 2, **caractérisé en ce que** la longueur d'onde d'émission de la lumière laser est sélectionnée de telle sorte que la couche (4) soit au moins partiellement transparente à la lumière laser (1).

4. Ensemble destiné à mettre en oeuvre le procédé selon l'une des revendications 1 à 3, l'ensemble présentant
un ou plusieurs lasers (21, 41) qui forment la lumière laser puisée qui palpe selon une résolution locale la couche (4) à étudier,
un dispositif (23, 43) qui focalise la lumière laser (22, 42) sur la couche (4) à étudier,
un dispositif de détection (26, 46) qui intercepte la lumière laser réfléchie par la couche (4),
un dispositif de commande de la formation des impulsions qui sélectionne la durée des impulsions de la lumière laser de telle sorte qu'une brève augmentation de température soit formée à l'intérieur de la partie (10) de la couche irradiée, à l'interface ou la couche frontière entre le substrat (3) et la couche (4) située par-dessus,
un dispositif de palpage optique de la couche et un dispositif (28, 48) à processeur et affichage qui évalue et affiche la lumière laser interceptée par le dispositif de détection (26, 46).

5. Ensemble selon la revendication 4, **caractérisé en ce que** le dispositif de palpage optique présente une table (25) à échantillon configurée pour pouvoir être commandée et déplacée suivant les deux dimensions du plan de la table et perpendiculairement par rapport à ce plan.

6. Ensemble selon la revendication 4, **caractérisé en ce que** le dispositif de palpage optique est configuré comme unité (50) de balayage x-y-z disposée de telle sorte qu'elle oriente en direction de la couche le faisceau (42) de rayons émis par le ou les lasers (41) et le guide au-dessus de cette couche.

7. Ensemble selon l'une des revendications 4 à 6, **caractérisé en ce qu'**un objectif (23, 43) est disposé dans la direction incidente des rayons pour concentrer sur la couche à étudier la lumière laser émise par le ou les lasers.

8. Ensemble selon l'une des revendications 4 à 7, **caractérisé en ce que** le dispositif (28, 48) à processeur et affichage échange des signaux avec le dispositif de détection (26, 46).

9. Ensemble selon l'une des revendications 4 à 8, **caractérisé en ce que** le dispositif de formation des impulsions commande le ou les lasers de manière à former des impulsions de rayonnement laser de forme rectangulaire dont la longueur et l'écart entre impulsions peuvent être réglés.
